(19) **Europäisches Patentamt / European Patent Office / Office européen des brevets**

(11) **EP 2 722 172 B1**

(12) **FASCICULE DE BREVET EUROPEEN**

(45) Date de publication et mention
de la délivrance du brevet:
**15.08.2018 Bulletin 2018/33**

(51) Int Cl.:
**B32B 27/20** *(2006.01)* **B29C 55/00** *(2006.01)*

(21) Numéro de dépôt: **13199581.3**

(22) Date de dépôt: **19.12.2008**

(54) **Feuille de sécurité comportant un support coextrudé**

Sicherheitsfolie mit koextrudierter Halterung

Security sheet having a coextruded substrate

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **28.12.2007 FR 0760449**

(43) Date de publication de la demande:
**23.04.2014 Bulletin 2014/17**

(62) Numéro(s) de document de la (des) demande(s)
initiale(s) en application de l'article 76 CBE:
**08867760.4 / 2 225 102**

(73) Titulaire: **Oberthur Fiduciaire SAS
75008 Paris (FR)**

(72) Inventeur: **Dietemann, Philippe
38400 SAINT-MARTIN-D'HERES (FR)**

(74) Mandataire: **Nony
11 rue Saint-Georges
75009 Paris (FR)**

(56) Documents cités:
**WO-A1-97/21202 GB-A- 2 338 680
US-A- 4 931 327 US-A1- 2007 178 295**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne les feuilles de sécurité, et plus particulièrement celles réalisées à partir d'au moins un matériau polymère.

**Arrière-plan**

Actuellement, les documents de sécurité tels que les billets de banque sont majoritairement réalisés à base de substrats en papier. En effet, ces derniers présentent de nombreux avantages : ils possèdent notamment un très bon rendu d'impression, une compressibilité qui permet une impression taille-douce en relief et une bonne résistance à la déchirure amorcée.

La technique de l'impression taille-douce est bien connue dans l'état de la technique, notamment pour l'impression de papiers de valeur tels que des billets de banque, des chèques et autres documents similaires.

Selon cette technique, une plaque d'impression est gravée pour former un dessin prédéterminé et les gravures, qui correspondent à des creux, sont ensuite remplies d'encre qui sera reportée sur le support à imprimer qui est déformé par pression, au moyen d'un cylindre par exemple.

La surface qui pénètre dans les gravures est ainsi marquée avec l'encre qui a été déposée auparavant dans lesdites gravures.

Les brevets américains US 5 062 359 et US 5 899 145 décrivent des exemples de machines d'impression utilisant le procédé d'impression taille-douce.

Il existe également des documents de sécurité, en particulier des billets de banque, réalisés en matière plastique. Comparés aux documents en papier, les documents en matière plastique ont l'avantage de présenter une meilleure durabilité, grâce notamment à leur faible porosité, à leur résistance à l'humidité, aux graisses ou aux autres agents pouvant accélérer le vieillissement des documents.

La demande de brevet australien AU 488 652 décrit un support de sécurité pour fabriquer des billets de banque comprenant un substrat en un matériau thermoplastique opaque lié à un tissu ou un non-tissé, en particulier une grille en polyamide, contribuant à la stabilité tridimensionnelle. Le substrat est imprimé et comporte des éléments de sécurité optiquement variables.

La demande internationale WO 83/00659 décrit une feuille de sécurité comprenant un substrat réalisé à partir d'un film d'un polymère transparent orienté biaxialement et revêtu de couches d'un matériau opaque, appliquées de façon à laisser une zone transparente permettant d'observer des éléments de sécurité incorporés dans le film polymère.

Les substrats en matière plastique actuellement utilisés présentent toutefois plusieurs inconvénients.

Un premier inconvénient est qu'ils ne sont pas réellement adaptés à l'impression taille-douce qui implique des pressions élevées. Or, le procédé d'impression taille-douce est largement utilisé dans le domaine des documents de sécurité et notamment des billets de banque.

Un second inconvénient est que les substrats en matière plastique présentent généralement une résistance à la déchirure amorcée moins élevée que celle d'un substrat en papier.

Par ailleurs, un autre inconvénient des substrats en matière plastique est que la tenue des impressions se dégrade souvent lors de la manipulation du document en plastique.

De ce fait, même si les documents de sécurité en matière plastique actuels ont une durée de vie relativement élevée par rapport aux documents de sécurité en papier pour ce qui concerne la résistance à la salissure et la résistance à la déchirure non amorcée, cet avantage est limité du fait que d'autres caractéristiques, telles que la tenue de l'impression, se dégradent rapidement.

La demande de brevet FR 2 816 643 décrit un support de sécurité complexe comprenant deux films de polyester entre lesquels est inséré un non-tissé, composé de fibres résistant mécaniquement au déchirement et à la chaleur. Les films de polyester et le non-tissé comprennent de préférence des éléments de sécurité.

Un tel support présente une résistance à la déchirure amorcée égale à celle du papier, des caractéristiques d'imprimabilité compatibles avec l'impression par taille-douce, une bonne durabilité de l'impression, ainsi qu'une bonne résistance à la température. Néanmoins ce support est de réalisation complexe.

EP 0 655 316 A2 divulgue une feuille extrudée en matériau polymère sur laquelle un pseudo filigrane est réalisé.

EP 0 470 760 A2 divulgue une feuille comportant trois couches coextrudées, dont une couche de coeur présentant des vides et deux couches de peau respectivement de part et d'autre de la couche de coeur.

**Résumé**

Il existe un besoin pour fournir une feuille de sécurité qui soit adaptée à une impression taille-douce.

Il existe encore un besoin pour fournir une feuille de sécurité comportant un support en matière plastique qui offre un très bon rendu d'impression et une excellente durabilité de l'impression.

Il existe également un besoin pour fournir une feuille de sécurité en matière plastique dont l'aspect et le toucher se rapprochent de ceux du papier.

Il existe encore un besoin pour diversifier encore les feuilles de sécurité pour produire de nouveaux effets sur le plan esthétique et/ou obtenir une sécurité accrue.

L'invention vise à répondre à tout ou partie de ces besoins,

L'invention a pour objet, selon l'un de ses aspects, une feuille comportant un support coextrudé, réalisé à partir d'au moins un matériau polymère, comportant une couche de coeur et au moins une couche de peau, la couche de coeur comportant des vides, une impression taille-douce ayant été réalisée sur la feuille.

Par « couche de coeur », encore appelée « couche de base », il faut comprendre que cette couche du support est plus éloignée de la surface de la feuille recevant l'impression taille-douce que la « couche de peau », encore appelée « couche de surface ». La couche de peau peut définir ou non une face extérieure de la feuille, le support pouvant être recouvert au moins partiellement par un revêtement destiné à accroître la tenue de l'impression, par exemple.

La Demanderesse a mis en évidence que la mauvaise imprimabilité des supports en matière plastique utilisés jusqu'à présent provenait d'un manque de compressibilité des supports. Or, une feuille selon l'invention présente l'avantage d'être compressible du fait de la présence de vides dans la couche de coeur. Elle est, de ce fait, tout à fait adaptée au procédé d'impression taille-douce et à tout autre traitement générant un effet tactile. La feuille peut présenter des reliefs d'impression équivalents à ceux obtenus sur une feuille en papier et une grande netteté des détails.

De préférence, l'impression taille-douce est réalisée sur une surface favorisant l'impression. Par exemple, lorsque le support est recouvert d'un revêtement externe, l'impression taille-douce est de préférence réalisée sur ce revêtement.

Un autre avantage d'une feuille selon l'invention est qu'elle permet un excellent rendu d'impression ainsi qu'un bon contraste, ce qui permet d'y imprimer de façon nette des structures fines, difficiles à reproduire par les contrefacteurs.

Un autre avantage encore d'une feuille selon l'invention est qu'elle peut présenter une durabilité de l'impression ainsi que des propriétés mécaniques améliorées par rapport à une feuille en papier.

L'invention a encore pour objet, selon un autre de ses aspects, une feuille de sécurité comportant un support coextrudé, réalisé à partir d'au moins un matériau polymère, comportant une couche de coeur et au moins une couche de peau, la couche de coeur comportant des vides, au moins l'une des couches du support comportant un élément de sécurité noyé dans la masse. Il s'agit par exemple de la couche de coeur ou de la couche de peau, voire des deux à la fois.

Une telle feuille peut être munie d'une grande variété d'éléments de sécurité, et présenter ainsi un niveau de sécurisation relativement élevé.

L'invention a encore pour objet, selon un autre de ses aspects, une feuille comportant un support coextrudé, réalisé à partir d'au moins un matériau polymère, comportant une couche de coeur placée entre deux couches de peau, la couche de coeur comportant des vides, les deux couches de peau présentant des couleurs différentes, lorsqu'éclairées en lumière visible ou non.

Une telle feuille présente l'avantage d'être relativement difficile à reproduire du fait de la présence des couches de peau de couleurs différentes et de procurer de nouveaux effets sur le plan esthétique. En effet, lorsque la feuille est observée en réflexion, chacune des couches de peau a une couleur différente. En revanche, lorsque la feuille est observée en transvision, une autre couleur peut apparaître, en fonction des couleurs des couches de peau notamment, à condition de réaliser le support avec une certaine transparence.

L'invention a encore pour objet, selon un autre de ses aspects, une feuille de sécurité comportant au moins une première région munie d'un moyen optique et au moins une deuxième région munie d'un élément de sécurité dont l'aspect est différent selon qu'il est observé directement ou à travers le moyen optique, la première région étant disposée sur la feuille de manière à se superposer à l'élément de sécurité lorsque la feuille est repliée en deux.

La feuille peut être réalisée de telle sorte qu'après pliage, grâce à l'observation à travers une région transparente de la feuille, au moins une information soit révélée.

## Description des figures

L'invention pourra être mieux comprise à la lecture de la description qui va suivre, d'exemples de mise en oeuvre non limitatifs de celle-ci, et à l'examen du dessin annexé, sur lequel :

- les figures 1 et 2 représentent, en vue de face, deux exemples de feuilles de sécurité selon l'invention,
- les figures 3 et 4 représentent, en vue de face également, deux autres exemples de feuilles de sécurité selon l'invention, munies chacune d'une partie transparente,
- les figures 5 et 6 représentent, de manière schématique et partielle, en coupe transversale, des feuilles de sécurité selon l'invention,
- la figure 7 est une vue de face selon VII de la feuille de la figure 6,
- les figures 8 et 9 représentent en vue de face une feuille de sécurité selon l'invention, respectivement à l'état déplié et plié en deux
- les figures 10 et 11 représentent, en coupe transversale, de manière schématique et partielle, différents exemples de feuilles de sécurité selon l'invention.

Sur les figures, les éléments constitutifs des feuilles de sécurité n'ont pas toujours été représentés avec un respect des proportions réelles, dans un souci de clarté du dessin.

## Feuille et support correspondant

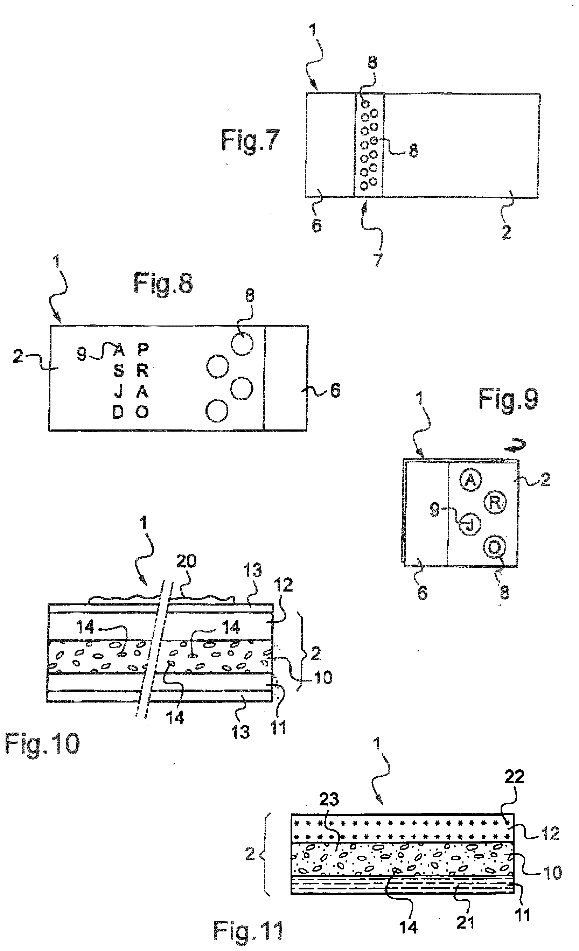

La figure 10 représente, en coupe, un exemple de feuille 1 selon l'invention, comportant un support 2 coextrudé.

Le support 2 peut comporter, comme illustré, une couche de coeur 10 et de part et d'autre de celle-ci des couches de peau 11 et 12.

Le support 2 peut être non complètement opaque.

La couche de base 10 comporte des vides 14, lesquels peuvent résulter d'un étirage de la couche de coeur à l'extrusion, par exemple un étirage bi-axial.

Le support 2 peut être recouvert au moins partiellement, sur une face au moins, par un revêtement 13.

La feuille 1 peut avoir reçu une ou plusieurs impressions taille-douce 20, par exemple sur le revêtement 13, ce dernier ayant par exemple été appliqué sur l'une des couches de peau au moins afin de lui conférer des propriétés d'imprimabilité satisfaisantes.

Par exemple, le revêtement comporte un liant, tel qu'un mélange de polymères d'acrylate de butyl, de styrène et d'acrylonitrile, et des charges, telles qu'un silicoaluminate et/ou de l'hydroxyde d'aluminium.

La feuille peut aussi comporter un revêtement possédant outre des propriétés d'imperméabilité des propriétés d'antisalissure et/ou d'amélioration de la durabilité, étant par exemple tel que décrit dans la demande EP 1 319 104. Par exemple, l'une des couches de peau au moins du support peut être recouverte d'une couche transparente comprenant une silice colloïdale et un liant, par exemple un polyuréthane.

Le support et/ou la feuille peut également comporter un vernis protecteur.

L'impression taille-douce peut par exemple s'effectuer sous une pression comprise entre 180 et 220 bars, par exemple égale à environ 200 bars.

L'encre imprimée en taille douce peut par exemple être une encre phosphorescente, luminescente, photochrome, thermochrome, entre autres, étant de préférence une encre fluorescente.

La taille des reliefs obtenus par l'impression taille douce peut être supérieure ou égale à 20 $\mu$m, allant par exemple jusqu'à 30 $\mu$m, voire 35 $\mu$m, contre environ 15 $\mu$m pour un support en matière plastique selon l'art antérieur.

Le support 2 peut être réalisé à partir d'au moins un matériau polymère, de préférence au moins une polyoléfine, par exemple un polyéthylène ou un polypropylène.

La couche de coeur 10 peut, par exemple, comporter un mélange de polyoléfine thermoplastique orientable avec au moins un résinat, notamment métallique, par exemple à base de calcium et de zinc, en une quantité de 2 à 50 % en poids par rapport au poids du mélange, la polyoléfine étant par exemple un polyéthylène haute densité. Le résinat peut comporter une phase séparée, répartie uniformément dans le polymère oléfinique, comme divulgué dans EP 470 760 A2.

La composition de la couche de coeur peut être par exemple celle donnée dans EP 0470 760 A2, à savoir (en proportions massiques):

| | |
|---|---|
| Polyéthylène (copolymer) HD | 100 |
| Resinat, notamment calcium-zinc | 5-15 |
| Polystyrène | 4.5-5.5 |
| Polyéthylène (homopolymer) HD | 17.5-21 |
| Calcium carbonate | 15-25 |
| Titanium dioxide | 5-10 |
| Styrene-butadiene copolymer | 0-1.0 |
| Calcium Oxide | 0.4-1.0 |

Le support présente par exemple la formulation suivante :

Couche de base (par exemple environ 80 um d'épaisseur) :

| Eléments constitutifs | Parts |
|---|---|
| Copolymère HDPE | 100 |
| Homopolymère HDPE | 17,6 |
| Polystyrène | 4,8 |
| Résine de colophane | 6,0 |
| Styrène-butadiène-styrène copolymère | 0,6 |
| CaCO$_3$ | 21,0 |
| TiO$_2$ (rutile) | 5,8 |
| Agents antistatiques, antioxydants, ... | 1,4 |

Couches de peau (par exemple environ 8 $\mu$m d'épaisseur) :

| Parts | Eléments constitutifs |
|---|---|
| 100 | Copolymère HDPE |
| 9,9 | Homopolymère HDPE |
| 15 | TiO$_2$ (rutile) |
| 0,1 | Calcium stéarate |

Chaque couche de peau 11 ou 12 peut comporter une polyoléfine et une charge minérale, notamment une silice. Chaque couche de peau 11 ou 12 peut comporter de 10 à 50 % en poids par rapport au poids du mélange, de charge minérale.

Au moins l'une des couches de peau peut comporter au moins trois matériaux polymères thermoplastiques dont un polymère caoutchouteux, au moins deux des matériaux ayant au moins un certain degré d'incompatibilité.

Au moins une couche de peau peut ainsi comporter une composition comportant un polyéthylène haute densité et un polyéthylène base densité ou un copolymère de propylène et un polymère caoutchouteux. Ce dernier peut être choisi parmi les copolymères thermoplastiques de butadiène et de styrène, les copolymères d'isobutylène et d'isoprène et les terpolymères d'éthylène, de propylène et de diène.

La couche de coeur 10 peut être plus épaisse que chacune des couches de peau 11 ou 12. La couche de coeur 10 peut avoir une épaisseur supérieure à 10 $\mu$m, mieux 50 $\mu$m, encore mieux 75 $\mu$m et chaque couche de peau une épaisseur inférieure à 50 $\mu$m, mieux 15 $\mu$m, encore mieux 10 $\mu$m. Le support 2 peut avoir une épaisseur totale comprise entre 70 et 120 $\mu$m, par exemple.

La couche de coeur 10 comporte des vides 14, comme indiqué ci-dessus. Le taux de vides du support 2 peut être compris entre 2 et 7 %, de préférence entre 4 et 6 %, par rapport au volume total du support. Les couches de peau 11 et 12 sont de préférence dépourvues de vides débouchant à leur surface.

La détermination du taux de vides du support peut notamment se faire après coupe du support par faisceau d'ions (ions Argon par exemple), ce qui permet de limiter l'apparition de rayures, de remplissages, de déchirures ou de compressions sur le support et de préserver la morphologie du support, favorisant ainsi la détermination de la porosité.

Après avoir réalisé la coupe, l'observation peut se faire au microscope électronique, notamment à l'aide d'un microscope électronique à balayage, par exemple du type ESEM Quanta 200 de EFPG. Il est alors possible de distinguer les différentes couches du support, par la couche de coeur et les couches de peau, les porosités ainsi que les éventuels éléments de sécurité.

Le taux de vides peut se calculer par le ratio entre l'aire totale des vides présents sur la coupe et l'aire totale de la coupe, grâce à la formule suivante :

$$\phi = \left\langle \overline{P_s} \right\rangle = \frac{S_{vide}}{S_{coupe}}$$

La coextrusion des différentes couches du support peut se faire à une température comprise par exemple entre 150 et 250°C.

La surface du support peut être soumise à une oxydation par un traitement par décharges électriques, de type corona. Un tel traitement permet d'obtenir une surface polaire ainsi que la mouillabilité requise pour accepter facilement les encres et revêtements que le support peut être amené à recevoir ultérieurement.

La demande EP 0470 760 divulgue des procédés de fabrication d'un support pouvant convenir à l'invention.

## Exemples proposés

### Exemple 1

On fait référence aux exemples 1 à 4 décrits dans EP 0 470 760 A2. Les feuilles correspondantes sont imprimées sur une face en taille douce.

### Exemple 2

Une feuille POLYART® HS 90 ou POLYART ® HS 115, de la société ARJOBEX, est imprimée sur une face selon une impression taille douce.

### Support avec ouverture traversante

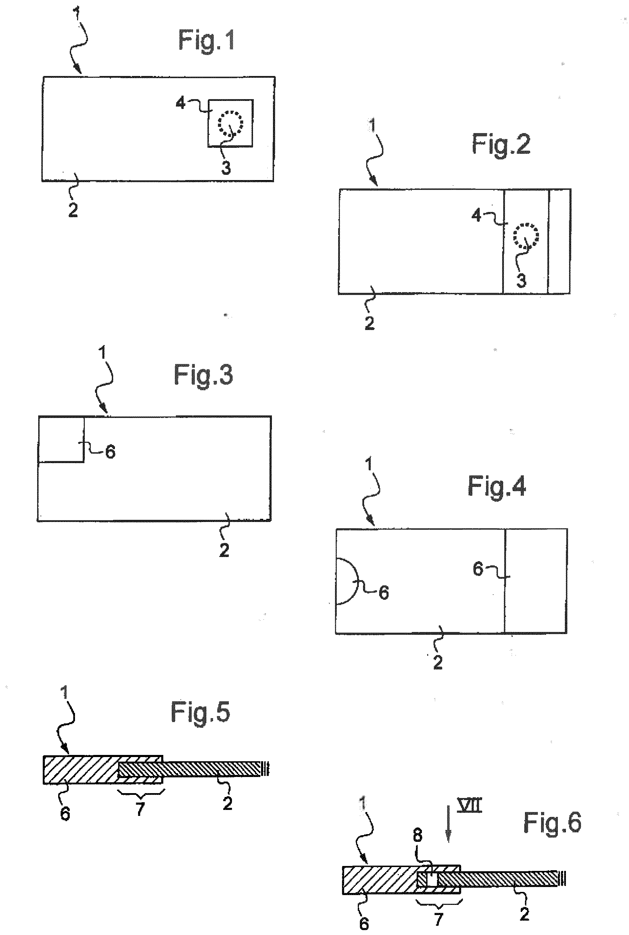

Le support 2 peut présenter au moins une ouverture traversante 3, comme illustré sur les figures 1 et 2.

La ou les ouvertures 3 du support peuvent par exemple être réalisées soit par poinçonnage, par découpe à l'emporte pièce, au laser, par ultrasons, ou par découpe avec un jet de fluide, notamment par jet d'eau.

De préférence, l'ouverture traversante 3 est située à proximité d'au moins un bord dans une zone latérale de la feuille, c'est à dire hors de la zone médiane de la feuille. Cette caractéristique est particulièrement intéressante lorsque la feuille est amenée à être pliée. Dans ce cas, la feuille présente une zone de dégradation correspondant à la zone de pliage, généralement une zone médiane. Il est alors avantageux que l'ouverture traversante 3, qui est peut être une zone de fragilisation, soit décentrée par rapport à la zone médiane.

L'ouverture traversante 3 peut avoir une surface comprise entre 1 et 10 cm$^2$, de préférence entre 3 et 5 cm$^2$.

L'ouverture traversante 3 peut présenter une forme géométrique telle qu'un cercle, un oval ou un polygone, notamment un carré, ou avoir la forme d'un caractère alphanumérique ou d'un logo.

L'ouverture 3 peut être recouverte, sur un côté au moins du support 2, par au moins un élément 4 en un matériau plastique, de préférence au moins partiellement transparent, de façon à former une fenêtre transparente mais non traversante dans la feuille 1. Cet élément 4 peut former un patch, comme illustré à la figure 1 ou s'étendre sous la forme d'une bande, dans le sens de la largeur par exemple, d'un bord à l'autre de la feuille 1, comme illustré à la figure 2.

En particulier, l'ouverture 3 est recouverte sur les deux côtés du support par un élément 4.

L'élément 4 peut le cas échéant constituer un moyen optique permettant d'observer un élément de sécurité et d'en révéler une caractéristique. L'élément 4 peut posséder des dimensions légèrement supérieures aux dimensions de l'ouverture traversante 3, ce qui facilite sa fixation sur le support 2.

L'élément 4 peut avoir une épaisseur comprise entre 5 et 20 μm, par exemple.

L'élément 4 peut présenter une surépaisseur au droit de l'ouverture traversante 3.

L'élément 4 peut le cas échéant comporter une encre ou des pigments fluorescents transparents en lumière visible et manifestant leur effet sous lumière UV. Le support étant opaque aux UV, l'effet fluorescent de l'élément 4 sera observable à travers l'ouverture traversante 3 quelque soit la face du support observée et que la source d'illumination soit placée devant ou derrière cette face. Par contre, l'effet fluorescent ne sera pleinement visible pour les régions de l'élément 4 s'étendant hors de l'ouverture 3 qu'en observant le support à partir de la face dudit support comportant l'élément 4, avec une source d'illumination située du côté de la face comportant l'élément 4. L'effet fluorescent sera visible pour les régions de l'élément 4 s'étendant hors de l'ouverture 3 avec un effet atténué en observant le support à partir de la face dépourvue de l'élément 4, avec une source d'illumination toujours située du côté de la face comportant l'élément 4.

Le support peut comporter une ouverture traversante 3 recouverte d'un élément 4 comportant une encre ou des pigments fluorescents sous forme d'une bande sur une des faces du support, le support étant lui-même imprimé sur son autre face d'une encre fluorescente dans la zone située en regard de l'élément 4.

L'ouverture traversante 3 peut également être recouverte de deux éléments 4, l'un comportant une encre ou des pigments fluorescents et l'autre pas, ou bien encore les deux éléments comportant des encres ou des pigments fluorescents de couleurs différentes.

Par exemple, le support comporte au moins une ouverture traversante 3, et l'ouverture 3 est recouverte sur une de ses faces par une bande en plastique transparente 4 comportant une encre fluorescente de couleur jaune et sur son autre face par une bande en plastique transparente 4 comportant une encre fluorescente de couleur bleue. Ainsi, le support étant opaque aux UV, on observera au niveau des bandes 4, une couleur de fluorescence différente de chaque côté du support et une couleur blanche résultant de la combinaison des deux fluorescences au niveau de l'ouverture traversante 3.

Dans un autre exemple l'ouverture traversante 3 est recouverte de part et d'autre de deux éléments 4 présentant chacun une surépaisseur au droit de l'ouverture traversante 3, chaque surépaisseur étant par exemple sensiblement égale à la moitié de l'épaisseur du support et étant située vers l'intérieur de l'ouverture, Une telle configuration permet d'éviter les déformations des éléments 4 au niveau de l'ouverture traversante, et de plus peut permettre le cas échéant d'assembler entre eux les éléments 4 à travers l'ouverture traversante 3, ce qui peut renforcer leur tenue sur le support 2.

Au moins un élément de sécurité peut éventuellement être disposé entre les éléments 4, étant par exemple observable depuis l'extérieur de la feuille.

Les éléments plats 4 peuvent être colorés, le cas échéant. Deux éléments 4 ayant des couleurs différentes peuvent être fixés sur des faces opposées du support.

Le support peut également comporter au moins une ouverture traversante servant à la fixation d'une partie transparente débordant du support, comme détaillé ci-après.

Feuille avec partie(s) transparente(s)

La feuille peut présenter une partie débordante 6 en au moins un matériau plastique transparent, appelée ci-après « partie transparente », comme illustré sur les figures 3 et 4.

Dans l'exemple de la figure 3, la feuille 1 comporte le support 2 et une partie transparente 6 formant un coin de la feuille 1.

Dans l'exemple de la figure 4, la feuille 1 comporte le support 2 et deux parties latérales transparentes 6. Ces dernières définissent pour l'une tout un bord latéral de la feuille 1 et pour l'autre un demi-cercle dans le bord opposé.

La figure 5 représente en coupe transversale une zone de jonction 7 entre le support 2 et la partie latérale transparente 6.

La partie latérale transparente 6 peut recouvrir le support 2 sur ses deux faces, améliorant ainsi la solidité de la jonction, comme on le voit sur cette figure.

Comme illustré sur les figures 6 et 7, le support 2 peut être muni d'au moins un évidement non traversant ou d'une ouverture 8 au niveau de la zone de jonction 7 entre le support 2 et la partie latérale transparente 6. Cette ou ces ouvertures 8 permettent de renforcer encore la solidité de la jonction 7, notamment lorsque le support 2 et la partie transparente 6 sont recouverts par un adhésif qui diffuse à travers la ou les ouvertures 8.

Dans le cas particulier où la partie transparente comporte une zone qui se superpose de part et d'autre du support, et que dans cette zone de recouvrement le support comporte des ouvertures, la partie transparente peut diffuser à travers le support et ainsi solidariser l'ensemble de la structure. La liaison à travers les ouvertures pourra être assurée soit par fusion/solidification de la zone transparente, soit par réaction de deux produits qui se trouvent respectivement sur les faces des films ou couches transparentes mises en contact, par exemple un adhésif bicomposant ou un adhésif sensible à la pression, un adhésif à base d'isoprène naturel (caoutchouc naturel) ou synthétique ayant les propriétés de se sceller sur lui-même.

Dans la zone de recouvrement, l'adhésif et/ou la partie transparente peut contenir un ou plusieurs éléments de sécurité sur une ou sur les deux faces mises en contact avec l'autre support.

La partie transparente peut comporter au moins un élément de sécurité supplémentaire.

En particulier, l'élément de sécurité supplémentaire peut être présent en masse et/ou à la surface de la partie transparente.

La partie transparente peut notamment comporter des hologrammes ou autres éléments à effet optique, notamment variable.

La partie transparente peut comporter des éléments de sécurité, notamment choisis parmi les fibres et les pigments luminescents et/ou iridescents, les fibres magnétiques et leurs mélanges.

La partie transparente 6 peut comporter un film d'au moins un matériau polymère, le cas échéant adhésivé, le film pouvant être laminé ou contrecollé sur le support 2 par exemple.

La partie transparente 6 peut être une couche extrudée ou co-extrudée d'un ou plusieurs polymères.

Par exemple, la partie transparente 6 tout comme l'élément 4 précité peut être réalisée en un matériau choisi parmi :

1) les résines polymérisées par addition telles que :

a) les résines polyoléfiniques pouvant avoir des densités variables et des degrés variables de ramifications telles que par exemple le polyéthylène, le polypropylène, le polyméthylpentène,
b) les résines élastomères telles que par exemple les éthylène-propylène-diène-monomères, le poly(acrylonitrile-butadiène-styrène), le poly(styrène-butadiène-styrène), le polybutadiène, le polyisoprène,
c) les résines vinyliques telles que par exemple le poly(chlorure de vinyle), le poly(acétate de vinyle), le poly(éthylène-acétate de vinyle), le poly(éthylène-alcool vinylique),
d) les résines halogénées telles que par exemple le poly(chlorure de vinyle), le polychloroprène, le poly(chlorure de vinylidène), le polytétrafluoroéthylène,
e) les résines styréniques telles que par exemple le polystyrène, le poly(styrène-acrylonitrile), le poly(styrène-butadiéne-styrène),
f) les résines acryliques telles que par exemple, le poly(méthacrylate de méthyle), le polyacrylonitrile, le poly(acrylonitrile-butadiène-styrène), le poly(éthylène-acrylate de méthyle),
g) les résines ionomères,

2) les résines polymérisées par condensation telles que :

a) les résines polyesters telles que par exemple le poly(éthylène téréphtalate), le poly(butylène téréphtalate), le poly(téréphtalate d'éthylène glycol), les glycérophtaliques,
b) les résines polyamides,
c) les résines polycarbonates,
d) les résines polyuréthanes,
e) les résines polyimides,

f) les résines polyacétals, telles que par exemple le polyvinylbutyral,
g) les résines polyéthers, telles que par exemple le polyoxyméthylène,
h) les résines époxydes,
i) les résines aminoplastes,
j) les résines phénoplastes,
k) les résines silicones,

3) les résines dérivées de la cellulose naturelle telles que :

a) la viscose,
b) l'acétate de cellulose.

La partie transparente peut être recouverte, sur au moins une partie, d'une couche imprimable et/ou favorisant l'adhésion d'encre, Par exemple, la partie transparente peut être rendue imprimable par dépôt d'un revêtement contenant un liant tel qu'un polymère de styrène-acrylique et des charges minérales.

La partie transparente peut encore recevoir un traitement de surface, notamment de type corona.

La partie transparente peut être recouverte, au moins partiellement, d'une couche possédant des propriétés d'antisalissure et/ou d'imprimabilité. Par exemple, la partie transparente peut être recouverte d'une couche transparente comprenant une silice colloïdale et un liant, par exemple un polyuréthane.

La partie transparente 6 peut représenter entre 20 et 40 % de la surface totale d'une face de la feuille.

De préférence, la feuille est telle que la partie transparente s'étende de part et d'autre du support dans la zone de recouvrement entre la zone transparente et le support. Ceci permet d'assurer une meilleure cohésion de la feuille et de renforcer la solidité de la jonction entre la zone transparente et le support.

Selon un mode de mise en oeuvre préférée de l'invention, la zone de recouvrement entre le support et la partie transparente ne présente pas de surépaisseur sensible, étant par exemple à peine perceptible au toucher, Par exemple, la feuille peut avoir une épaisseur sensiblement constante, de l'ordre de 100 μm pour faire un billet de banque. Plus particulièrement au niveau de la zone de recouvrement, la partie transparente et/ou le support peuvent avoir une épaisseur réduite par rapport à leurs épaisseurs respectives sur le reste de la feuille.

Ouvertures coopérant avec des motifs et/ou éléments de sécurité de la feuille.

La ou les ouvertures du support peuvent coopérer avec des caractères visibles, mentionnés où apparaissant sur au moins l'une des faces de la feuille, pour révéler une information quand on plie la feuille.

Plus particulièrement, au moins une ouverture peut coopérer avec au moins un caractère visible, mentionné ou apparaissant sur la face recto de la feuille, pour révéler une première information quand on plie la feuille d'un côté, et coopérer avec au moins un caractère visible, mentionné ou apparaissant sur la face verso de la feuille, le ou les caractères étant identiques ou différents du ou des caractères de la face recto, pour révéler une seconde information, identique ou différente de la première information, quand on plie la feuille de l'autre côté.

Par « visible », on entend que les caractères sont directement perceptibles par l'oeil humain, mais également que les caractères peuvent être rendus visibles par l'oeil humain à l'aide d'un appareil grossissant (loupe, microscope, compte-fils) et de plus, éventuellement après excitation sous un rayonnement, notamment ultraviolet ou infrarouge.

Les figures 8 et 9 représentent un autre exemple de feuille 1 selon l'invention, comportant également une partie transparente 6, laquelle peut recouvrir au moins une ouverture 8 du support 2, par exemple sur ses deux faces, au niveau de la zone de jonction 7.

Au moins un motif, par exemple un ou plusieurs caractères 9 est imprimé sur le support 2, de sorte que lorsque l'on plie en deux la feuille 1, le ou les caractères 9 sont visibles à travers la ou les ouvertures 8.

La feuille peut être telle qu'elle comporte au moins deux éléments de sécurité situés respectivement à la surface du support et dans une ouverture traversante ou dans une zone transparente recouvrant l'ouverture traversante, les deux éléments de sécurité étant placés de manière à se superposer lorsque la feuille de sécurité est pliée, pour former une sécurisation ou une information supplémentaire.

Par exemple, un premier élément de sécurité peut être un réseau lenticulaire qui recouvrira un second élément de sécurité constitué par une image brouillée, qui ne sera révélée que lors de la superposition des deux éléments de sécurité:

Dans un autre exemple, un premier élément de sécurité est un filtre polarisé et un second élément de sécurité est formé de cristaux liquides, afin de permettre à une image liée aux cristaux liquides d'être révélée par le filtre.

## Eléments de sécurité

On connaît de manière générale des documents de sécurité et/ou de valeur comportant des éléments de sécurité permettant de protéger ces documents contre des tentatives de falsification ou de contrefaçon.

Parmi les éléments de sécurité, certains sont détectables à l'oeil nu, en lumière visible, sans utilisation d'un appareil particulier. Ces éléments de sécurité comportent par exemple des fibres ou planchettes colorées.

Ces éléments de sécurité sont dits de premier niveau.

D'autres types d'éléments de sécurité sont détectables seulement à l'aide d'un appareil relativement simple tel qu'une lampe émettant dans l'ultraviolet ou l'infrarouge. Ces éléments de sécurité comportent par exemple des fibres, des planchettes ou des particules. Ces éléments de sécurité peuvent être visibles à l'oeil nu ou non, étant par exemple luminescents sous une lampe de Wood émettant à une longueur d'onde de 365 nm. Ces éléments peuvent encore être par exemple du type thermochromique ou photochromique.

Ces éléments de sécurité sont dits de deuxième niveau,

D'autres types d'éléments de sécurité encore nécessitent pour leur détection un appareil de détection plus sophistiqué. Ces éléments de sécurité sont par exemple capables de générer un signal spécifique lorsqu'ils sont soumis, de manière simultanée ou non, à une ou plusieurs sources d'excitation extérieures. La détection automatique du signal permet d'authentifier, le cas échéant, le document.

Ces éléments de sécurité comportent par exemple des traceurs se présentant sous la forme de matière active, de particules ou de fibres, capables de générer un signal spécifique lorsque ces traceurs sont soumis à une excitation opto-électronique, électrique, magnétique ou électromagnétique.

Ces éléments de sécurité sont dits de troisième niveau.

L'ensemble des éléments de sécurité cités ci-dessus peut être utilisé dans le cadre de la présente invention. Au moins une couche de peau et/ou la couche de coeur et/ou le revêtement du support peut comporter au moins un tel élément de sécurité de premier, deuxième ou troisième niveau.

La couche de coeur et/ou au moins une couche de peau et/ou le revêtement peut comporter un élément de sécurité dans la masse et/ou à sa surface.

Les éléments de sécurité respectifs des couches de peau, de coeur et du revêtement peuvent être tous différents les uns des autres, ou en variante tous identiques.

La couche de coeur peut présenter une concentration en éléments de sécurité plus élevée que pour les autres couches, du fait de son éloignement de la surface.

Les éléments de sécurité peuvent être incorporés au support avant extrusion de ce dernier, de façon à être dispersés dans la masse de l'une des couches au moins du support.

La présence d'éléments de sécurité dans une feuille selon l'invention peut permettre d'obtenir des zones sensiblement opaques sans pour autant avoir à réaliser des impressions sur la feuille. Cela peut, de ce fait, représenter une alternative aux impressions classiques réalisées sur des supports plastiques selon l'art antérieur.

Au moins un élément de sécurité, par exemple sous forme de fil, peut encore être incorporé entre deux couches, par exemple entre une couche de peau et la couche de coeur.

Dans l'exemple de la figure 11, des éléments de sécurité 21, 22 et 23 ont été introduits en masse dans les couches de peau 11, de coeur 10 et de peau 12, les éléments de sécurité 21, 22 et 23 étant par exemple différents pour les trois couches mais identiques pour une même couche. En variante, une même couche peut avoir des éléments de sécurité différents.

Les deux couches de peau peuvent comporter chacune un élément de sécurité, l'élément de sécurité de la première couche de surface étant différent de l'élément de sécurité de la deuxième couche de peau.

Au moins un élément de sécurité peut être en bande ou en fil.

Au moins un élément de sécurité peut être un fil de sécurité, un foil, un patch, une planchette, un pseudo filigrane, un fil tricoté, des particules de marquage dites « taggantes », des fibres de sécurité et/ou une combinaison de tels éléments.

Comme exemples de particules de marquage, on peut notamment citer les associations suivantes :

a) pigment Altair de la société VERISMO LLC placé dans une couche favorisant l'impression, par exemple une couche de surface comportant un revêtement et,
b) pigment Datatrace DNA de la société DATATRACE placé dans la ou les couche(s) de surface,

ou

lorsque le support comporte au moins deux couches de surface,

a) pigment Spot Tag de la société BSECURE placé dans une des couches de surface et,
b) pigment Altair de la société VERISMO LLC placé dans l'autre couche de surface.

De façon générale, l'élément de sécurité peut être choisi parmi les particules de marquage suivantes :

- Spot tag de la société BSECURE,
- Datatrace DNA de la société DATATRACE,
- les poudres noires de la société MICROTAG,
- IR Regulus 93, IR Regulus 39, dérivé Lanthanide, Sirius ou Altair de la société VERISMO,
- « taggants » commercialisés par la société PAYNE SECURITY.

Au moins un élément de sécurité peut en outre correspondre à un élément d'authentification et/ou d'identification choisi parmi au moins l'un des éléments suivants : un élément de mise en évidence d'une falsification, notamment visible et/ou détectable à l'aide d'un dispositif spécifique de détection, un élément à effet optique variable, interférentiel et/ou diffractif, holographique, iridescent ou à cristaux liquides, un revêtement magnétique ou cristallin, des fibres magnétiques, des traceurs détectables par résonance magnétique, des traceurs détectables par fluorescence X, des biomarqueurs, un vernis ou une encre, des traceurs luminescents, fluorescents ou phosphorescents, des composés photochromiques, thermochromiques, électroluminescents et/ou piezochromiques et/ou qui changent de couleur au contact d'un ou de plusieurs produits chimiques ou biochimiques prédéterminés, les dispositifs électroniques, notamment RFID.

Au moins un élément de sécurité peut être choisi parmi les fibres et/ou les encres et/ou les pigments luminescents, par exemple uniquement visibles sous un rayonnement UV ou laser, et/ou iridescents, les fibres magnétiques et/ou métalliques et leurs mélanges. De préférence, un tel élément de sécurité sera présent dans la masse de la couche de base et/ou d'une couche de surface et/ou d'un revêtement.

Au moins un élément de sécurité peut être un élément thermochrome, piézochrome ou photochrome.

Au moins un élément de sécurité peut être une particule luminescente, en particulier fluorescente.

Au moins un élément de sécurité peut être une particule de marquage contenant un fragment d'ADN.

La feuille peut comporter tous types d'éléments de sécurité, en surface notamment.

Au moins un élément de sécurité peut être un film métallique partiellement démétallisé et/ou présentant des effets visuels, par exemple holographiques, situé à la surface du support.

Au moins un élément de sécurité peut être une couche métallique située à la surface d'au moins une partie du support. En particulier, la couche de métal peut être partiellement recouverte d'une couche opaque, afin de former des motifs.

Au moins un élément de sécurité peut être un motif formé de zones plus translucides que le support et apparaissant comme un filigrane, réalisé par exemple selon la méthode décrite dans la demande de brevet EP 1 518 861.

Au moins un élément de sécurité peut être un élément plat en un matériau spécifique qui collecte la lumière (« guide d'onde ») situé à la surface du support. De tels matériaux collecteurs de lumière luminescents pouvant convenir sont, par exemple, des films polymères à base de polycarbonate, appelés LISA® et commercialisés par la société BAYER.

De préférence l'élément plat, réalisé en un matériau spécifique qui collecte la lumière, comporte des motifs gravés, embossés ou imprimés notamment en négatif en surface, permettant d'observer la luminescence au moins au niveau des motifs.

## Exemples proposés

### Exemple 3

Une feuille de sécurité est réalisée avec le pigment Altair de la société VERSIMO Llc dans le revêtement favorisant l'impression, déposé sur le support et le pigment Datatrace DNC de la société Datatrace dans les deux couches de peau du support.

### Exemple 4

Une feuille de sécurité est réalisée avec le pigment Spot Tag de la société Besecure dans l'une des couches de peau du support et le pigment Altair dans l'autre couche de peau du support.

### Support multicouche coloré

La feuille peut comporter un support coextrudé ayant par exemple les caractéristiques définies plus haut, dont la couche de coeur est placée entre deux couches de peau de couleurs différentes.

Les différentes composantes de la couleur sont définies dans l'espace colorimétrique CIE1976 (L*, a*, b*) ou CIELAB. La valeur a* correspond à la position sur l'axe rouge/vert et la valeur b* à la position sur l'axe bleu/jaune. La saturation C* correspond à la quantité $(a^{*2} + b^{*2})1/2$. L'angle de teinte h correspond à la quantité arctan(a*/b*). L* désigne la clarté.

Dans un exemple de mise en oeuvre de l'invention, l'une au moins des couches de surface présente une clarté L* supérieure à 70, notamment 80 ou 90.

Une des couches de peau peut présenter, si on le souhaite, une couleur ayant une saturation C* inférieure à 50, notamment à 35 ou 20, de manière à apparaître, en réflexion, avec une couleur nuancée, faiblement saturée.

Une des couches de peau peut incorporer dans sa masse au moins un agent de coloration.

Cet agent de coloration peut être de tout type, étant par exemple choisi parmi : un colorant direct, un colorant acide, un colorant basique, un pigment organique ou minéral, cette liste n'étant pas limitative.

Les couleurs précitées peuvent être dues à des agents de coloration différents et/ou à des concentrations différentes présents respectivement dans la masse des deux couches de peau.

La feuille peut comporter, le cas échéant, une couche de revêtement comportant au moins un agent de coloration, les couches de peau et la couche de revêtement ayant des couleurs différentes.

Les couches de peau peuvent définir les faces extérieures de la feuille et celles-ci peuvent présenter en réflexion, sous lumière visible, des couleurs différentes, notamment des saturations et/ou des angles de teinte différents.

L'une des couches de peau peut comporter une première zone fluorescente capable d'émettre par fluorescence, dans une condition d'éclairage prédéfinie, une lumière visible d'une première couleur, et l'autre couche comporte une deuxième zone fluorescente capable d'émettre par fluorescence, dans la condition d'éclairage prédéfinie, une lumière visible d'une deuxième couleur, différente de la première.

L'authentification et/ou l'identification d'un article comportant une telle structure ou feuille peut faire ainsi appel à deux étapes d'observation depuis respectivement deux faces opposées de l'article, ce qui renforce la protection de l'article contre la falsification.

La condition d'éclairage prédéfinie peut correspondre à un éclairage ultraviolet, notamment de longueur d'onde proche du visible, par exemple voisin de 365 nm. En variante, la condition d'éclairage prédéfinie correspond à un éclairage infrarouge.

### Exemple proposé

### Exemple 5

Une feuille de sécurité, par exemple de type POLYART®, est réalisée avec un support transparent ou translucide dont les couches de peau ont été modifiées par l'introduction d'agents de coloration pour apparaître respectivement jaune et bleu cyan.

La feuille peut ainsi apparaître, par transvision, avec une couleur correspondant à la superposition des couleurs respectives des deux couches, en l'espèce en vert, différente des couleurs des deux couches visibles en réflexion.

### Article de sécurité

L'invention concerne également un article, notamment un document de sécurité et/ou de valeur ou un dispositif de conditionnement, comportant une feuille telle que définie ci-dessus.

En particulier, l'article peut être choisi parmi : un document d'identité, un moyen de paiement tel qu'un chèque ou un billet de banque, une carte d'identité, une feuille ou un livret de passeport, un visa, un coupon, une étiquette de protection et/ou d'authentification, une étiquette de traçabilité, un papier tête de lettre ou à visée publicitaire, entre autres.

### Procédé d'authentification

L'invention a encore pour objet, selon un autre de ses aspects, un procédé d'authentification et/ou d'identification d'un article comportant une feuille telle que définie précédemment, le procédé comportant les étapes suivantes :

- observer au moins un élément de sécurité présent au sein du support ou sur le support de la feuille,
- conclure quant à l'authenticité et/ou l'identité de l'article au moins à partir de cette observation.

L'invention a encore pour objet, selon un autre de ses aspects, un procédé d'authentification et/ou d'identification d'un article comportant une feuille telle que définie précédemment, le procédé comportant les étapes suivantes :

- observer la couleur d'une des couches de peau en lumière réfléchie,

- observer la couleur de l'autre couche de peau en lumière réfléchie,
- observer, en lumière transmise, la couleur résultant de la superposition des couleurs des couches de peau.

L'authenticité et/ou l'identité de l'article peut être déduite au moins des couleurs observées dans les étapes ci-dessus.

Bien entendu, l'invention n'est pas limitée aux exemples de mise en oeuvre qui viennent d'être décrits.

L'expression « comportant un » doit être comprise comme étant synonyme de « comportant au moins un », sauf si le contraire est spécifié.

**Revendications**

1. Feuille (1) comportant un support (2) coextrudé, réalisé à partir d'au moins un matériau polymère, comportant une couche de coeur (10) et au moins une couche de peau (11 ; 12), la couche de coeur (10) comportant des vides (14), au moins l'une des couches du support comportant un élément de sécurité (21 ; 22 ; 23) dans la masse, **caractérisée en ce que** le support comporte au moins une ouverture traversante (3) et une partie transparente (6) comportant un matériau plastique transparent, notamment un film polymère, la partie transparente étant un élément (4) recouvrant l'ouverture traversante.

2. Feuille (1) selon la revendication 1, la couche de coeur (10) étant disposée entre deux couches de peau (11; 12), les deux couches de peau présentant des couleurs différentes.

3. Feuille selon l'une des revendications 1 et 2, comportant des éléments de sécurité respectifs différents dans la ou les couches de peau, la couche de coeur et dans un revêtement recouvrant au moins partiellement le support (2).

4. Feuille selon l'une quelconque des revendications 1 à 3, les couches de peau apparaissant, en réflexion, avec des couleurs différentes et la feuille apparaissant, en transvision, avec une couleur correspondant à la superposition des couleurs respectives des deux couches de peau, notamment une couleur différente des couleurs des deux couches de peau visibles en réflexion.

5. Feuille selon l'une quelconque des revendications précédentes, la couche de coeur (10) ayant une épaisseur supérieure ou égale à 10 $\mu$m, mieux supérieure ou égale à 50 $\mu$m, encore mieux 75 $\mu$m, la ou les couche(s) de peau (11; 12) ayant une épaisseur inférieure ou égale à 50 $\mu$m, notamment inférieure ou égale à 15 $\mu$m, mieux 10 $\mu$m, et le support

(2) ayant une épaisseur totale comprise entre 70 et 120 $\mu$m.

6. Feuille selon l'une quelconque des revendications précédentes, les deux faces du support étant recouvertes chacune au moins partiellement par un revêtement (13), le revêtement (13) conférant à la feuille des propriétés d'imprimabilité.

7. Feuille selon l'une quelconque des revendications précédentes, la feuille comportant au moins deux éléments de sécurité situés respectivement d'une part à la surface du support et d'autre part dans une ouverture traversante du support ou dans une partie transparente recouvrant l'ouverture traversante, les deux éléments de sécurité étant placés de manière à se superposer lorsque la feuille de sécurité est pliée en deux, pour former une sécurisation ou révéler une information.

8. Feuille selon l'une quelconque des revendications précédentes, le taux de vides du support étant compris entre 2 et 7%.

9. Feuille selon l'une quelconque des revendications précédentes, le matériau polymère comportant au moins une polyoléfine, notamment un polyéthylène ou un polypropylène.

10. Feuille selon l'une quelconque des revendications précédentes, la couche de coeur (10) comportant un mélange de polyoléfine thermoplastique orientable, notamment un polyéthylène haute densité, avec au moins un résinat, notamment métallique, en une quantité de 2 à 50% en poids, par rapport au poids du mélange.

11. Feuille selon l'une quelconque des revendications précédentes, la ou chaque couche de peau (11; 12) comportant une polyoléfine et une charge minérale, notamment une silice.

12. Procédé de fabrication d'une feuille selon l'une quelconque des revendications précédentes, **caractérisé par le fait que** le support de la feuille est étiré, de préférence étiré biaxialement.

13. Procédé selon la revendication précédente, au moins une ouverture traversante étant découpée dans le support, notamment par poinçonnage, au laser, à l'emporte pièce, par ultra-sons, ou par découpe avec un jet de fluide, notamment par jet d'eau.

14. Procédé selon l'une des revendications 12 et 13, l'élément de sécurité étant introduit dans la matière du support avant extrusion du support.

**Patentansprüche**

1.  Folie (1), umfassend einen co-extrudierten Träger (2) aus mindestens einem polymeren Material, umfassend eine Kernschicht (10) und mindestens eine Außenschicht (11; 12), wobei die Kernschicht (10) Hohlräume (14) umfasst, wobei mindestens eine der Schichten des Trägers in ihrer Masse ein Sicherheitselement (21; 22; 23) aufweist,
    **dadurch gekennzeichnet, dass**
    der Träger zumindest eine durchgehende Öffnung (3) und einen transparenten Teil (6) enthält, der ein transparentes Material umfasst, insbesondere einen Polymerfilm, wobei der transparente Teil ein Element (4) ist, welches die durchgehende Öffnung bedeckt.

2.  Folie (1) nach Anspruch 1, wobei die Kernschicht (10) zwischen zwei Außenschichten (11; 12) angeordnet ist, wobei die beiden Außenschichten unterschiedliche Farben aufweisen.

3.  Folie nach einem der Ansprüche 1 und 2, umfassend jeweils unterschiedliche Sicherheitselemente in der Außenschicht oder den Außenschichten, der Kernschicht und in einer Beschichtung, die den Träger (2) zumindest teilweise bedeckt.

4.  Folie nach einem der Ansprüche 1 bis 3, wobei die Außenschichten in Reflexion in verschiedenen Farben erscheinen und die Folie in Durchsicht in einer Farbe erscheint, die derjenigen der Überlagerung der jeweiligen Farben der beiden Außenschichten entspricht, insbesondere einer Farbe, die sich von den in Reflexion sichtbaren Farben der beiden Außenschichten unterscheidet.

5.  Folie nach einem der vorhergehenden Ansprüche, wobei die Kernschicht (10) eine Dicke von mehr als oder gleich 10 $\mu$m, besser mehr als oder gleich 50 $\mu$m, bevorzugter 75 $\mu$m, die Außenschicht(en) (11; 12) eine Dicke von weniger als oder gleich 50 $\mu$m, insbesondere weniger als oder gleich 15 $\mu$m, vorzugsweise 10 $\mu$m, und dem Träger (2) eine Gesamtdicke zwischen 70 und 120 $\mu$m haben.

6.  Folie nach einem der vorhergehenden Ansprüche, wobei die beiden Seiten des Trägers jeweils zumindest teilweise durch eine Beschichtung (13) bedeckt sind, wobei die Beschichtung (13) der Folie Bedruckbarkeit verleiht.

7.  Folie nach einem der vorhergehenden Ansprüche, wobei die Folie mindestens zwei Sicherheitselemente umfasst, die einerseits auf einer Oberfläche des Trägers und andererseits in einer durchgehenden Öffnung des Trägers oder in einem transparenten Bereich, welcher die durchgehende Öffnung abdeckt, angeordnet sind, wobei die zwei Sicherheitselemente so platziert sind, dass sie übereinandergelegt werden, wenn die Sicherheitsfolie doppelt gefaltet wird, um eine Sicherung zu bilden oder Informationen zu freizugeben.

8.  Folie nach einem der vorhergehenden Ansprüche, wobei der Hohlraumanteil des Trägers zwischen 3 und 7% liegt.

9.  Folie nach einem der vorhergehenden Ansprüche, wobei das polymere Material mindestens ein Polyolefin, insbesondere ein Polyethylen oder ein Polypropylen umfasst.

10. Eine Folie nach einem der vorhergehenden Ansprüche, wobei die Kernschicht (10) eine Mischung aus orientierbarem thermoplastischen Polyolefin, insbesondere einem Polyethylen hoher Dichte, mit mindestens einem Resinat, insbesondere metallisch, in einer Menge von 2 bis 50% Gewichtsanteil bezogen auf das Gewicht der Mischung enthält.

11. Folie nach einem der vorhergehenden Ansprüche, wobei die oder jede Außenschicht (11; 12) ein Polyolefin und einen mineralischen Füllstoff, insbesondere eine Kieselsäure, enthält.

12. Verfahren zur Herstellung einer Folie nach einem der vorhergehenden Ansprüche, **dadurch gekennzeichnet, dass** die Unterlage der Folie gestreckt, vorzugsweise biaxial gestreckt wird.

13. Verfahren nach dem vorhergehenden Anspruch, wobei in den Träger, insbesondere durch Laser, durch Stanzen, durch Ultraschall oder durch Schneiden mit einem Fluidstrahl, insbesondere durch Wasserstrahl, eine Durchgangsöffnung geschnitten wird.

14. Verfahren nach einem der Ansprüche 12 und 13, wobei das Sicherheitselement vor dem Extrudieren des Trägers in das Material des Trägers eingebracht wird.

**Claims**

1.  A sheet (1) comprising a coextruded medium (2) made from at least one polymer material, comprising a core layer (10) and at least one skin layer (11; 12), the core layer (10) including voids (14), at least one of the layers of the medium including a security element (21; 22; 23) embedded therein, **characterized in that** the medium comprises at least one through opening (3) and a transparent portion (6) comprising a transparent plastics material, in particular a polymer film, the transparent portion being an element (4) covering the through opening.

**2.** A sheet (1) according to claim 1, the core layer (10) being placed between two skin layers (11; 12), the two skin layers presenting different colors.

**3.** A sheet according to one of claims 1 and 2, comprising respective different security elements in the skin layer or layers, the core layer, and in a coating covering at least partially the medium (2).

**4.** A sheet according to any one of claim 1 to 3, the skin layers appearing, in reflection, to have different colors and the sheet appearing, in transmitted light, to have a color that corresponds to superposing the respective colors of the two skin layers, in particular a color that is different from the colors of the two skin layers as visible in reflection.

**5.** A sheet according to any preceding claim, the core layer (10) having a thickness greater than or equal to 10 $\mu$m, better greater than or equal to 50 $\mu$m, better still greater than or equal to 75 $\mu$m, the skin layer(s) (11; 12) having a thickness less than or equal to 50 $\mu$m, in particular less than or equal to 15 $\mu$m, better less than or equal to 10 $\mu$m, and the medium (2) having a total thickness lying in the range 70 $\mu$m to 120 $\mu$m.

**6.** A sheet according to the preceding claim, each of the two faces of the medium being covered at least in part in a coating, the coating (13) imparting printability properties to the sheet.

**7.** A sheet according to any preceding claim, the sheet including at least two security elements situated respectively on the one hand at the surface of the medium and on the other hand in a through opening of the medium or in a transparent portion overlying the through opening, the two security elements being placed in such a manner as to overlie each other when the security sheet is folded in half, in order to form a security feature or to reveal information.

**8.** A sheet according to any preceding claim, the void volume in the medium lying in the range 2% to 7%.

**9.** A sheet according to any preceding claim, the polymer material comprising at least one polyolefin, in particular a polyethylene or a polypropylene.

**10.** A sheet according to any preceding claim, the core layer (10) comprising a mixture of orientable thermoplastic polyolefin, in particular a high density polyethylene, with at least one resinate, in particular a metallic resinate, constituting 2% to 50% by weight relative to the weight of the mixture.

**11.** A sheet according to any preceding claim, the or each skin layer (11; 12) comprising a polyolefin with a mineral filler, in particular a silica filler.

**12.** A method of fabricating a sheet according to any preceding claim, the method being **characterized by** the fact that the medium of the sheet is stretched, preferably stretched bi-axially.

**13.** A method according to the preceding claim, at least one through opening being cut in the medium, in particular by piercing, by laser, by punching, by ultrasound, or by cutting with a fluid jet, in particular a water jet.

**14.** A method according to one of claims 12 and 13, the security element being introduced in the material of the medium prior to the medium being extruded.

Fig.1

Fig.2

Fig.3

Fig.4

Fig.5

Fig.6

Fig.7

Fig.8

Fig.9

Fig.10

Fig.11

## RÉFÉRENCES CITÉES DANS LA DESCRIPTION

**Documents brevets cités dans la description**

- US 5062359 A
- US 5899145 A
- AU 488652
- WO 8300659 A
- FR 2816643
- EP 0655316 A2
- EP 0470760 A2
- EP 1319104 A
- EP 470760 A2
- EP 0470760 A
- EP 1518861 A